# EUROPEAN PATENT APPLICATION

(11) **EP 0 991 039 A2**
(43) Date of publication of application: **05.04.2000**
(21) Application number: 99307020.0
(22) Date of filing: 03.09.1999
(51) Int. Cl.: G07G 1/00, G06F 17/60, G07F 17/16

(54) **Local messaging**

(30) Priority: 14.09.1998 GB 9819935; 06.08.1999 GB 9918471
(71) Applicant: NCR INTERNATIONAL INC., Dayton, Ohio 45479 (US)
(72) Inventor: Woods, Sarah, London SW1W 8QR (GB); Emmott, Stephen J., London SE1 9JL (GB); Johnson, Graham I., Tayport Fife DD6 9AA (GB)
(74) Representative: Cleary, Fidelma

(57) **Abstract**

A communications system for conveying visit information such as purchasing information to an actual or potential visitor such as a customer (20) comprises transmitter means (16) for transmitting to that visitor (20) information appropriate to the visitor's position within or with respect to premises being visited, such as retail premises (10, MM). In a retail scenario, portable communications apparatus (24) that moves with the customer (20), such as an electronic wallet or a trolley-mounted terminal, receives the transmitted information and conveys purchasing information to the customer (20). The transmitted information is preferably tailored to the customer (20) but should any transmitted information be deemed inappropriate to the customer (20), the communications apparatus (24) can filter that information to convey only purchasing information of relevance.

## Description

This invention relates to local messaging and has particular, but not exclusive, application to messaging a potential customer with advertising material.

It is well known in the realms of retailing that the probability of converting interest on the part of a user who has seen an advertisement into an actual sale is improved when there is minimal resistance presented to a purchaser. If the potential purchaser has to find a local store which stocks the advertised item, travel to the store (with all the attendant delays) and then collect the item, there is considerable resistance presented to the potential consumer. This widely recognised problem has been addressed in the past by telephone sales and dedicated broadcast channels which carry nothing but advertisements.

However, certain items are not suitable for sale by this technique and certain consumers wish to study a potential purchase before actually buying. For example, items of food are not really suitable for sale by mail order because of a relatively short "shelf-life" which these items typically possess. In addition, staple food items often have a high weight-to-value ratio meaning that it is not economically viable to distribute them on a per-customer basis. Furthermore, even those customers who are generally happy to order items without having seen them will probably wish to buy items of clothing and footwear in person. Consequently, there will continue to be a requirement for retail premises, whether local or in shopping malls, which are visited by the consumer in person.

The difficulty for suppliers of commodities is that a visitor to a shopping mall on a Saturday may well have forgotten that he or she was interested in a pair of trainers that they saw advertised on television on Wednesday evening.

Prior approaches to this problem include posters and in-store announcements to customers. However, posters are labour intensive and have to be designed, printed, delivered to the store and then placed at the relevant points. All of this means that posters cannot respond quickly to retailing initiatives and may not necessarily change between two consecutive visits made to the store by a consumer. Consequently, they do not have the necessary impact effectively to advertise special offers at short notice. In-store (public address) announcements have proved equally unpopular with consumers.

It is an object of the present invention to ameliorate the above disadvantages.

From one aspect, the invention resides in a communications system for conveying visit information to an actual or potential visitor, the system comprising transmitter means for transmitting to that visitor information appropriate to the visitor's position within or with respect to premises being visited, and portable communications apparatus that moves with the visitor for receiving said transmitted information and conveying visit information to the visitor.

In a retail scenario, for example, the visit information would be purchasing or store information, the visitor would be an actual or potential customer, and the premises being visited would be retail premises such as a store or a mall. However, in a broader sense, the invention contemplates non-retail scenarios such as visiting a gym, whereupon information appropriate to e.g. a particular workout machine can be transmitted to the visitor depending upon his or her position within or with respect to the gym. Another non-retail scenario is visiting a museum or art gallery, whereupon information appropriate to e.g. a particular exhibit can be transmitted to the visitor depending upon his or her position within or with respect to the museum or gallery.

The transmitter means preferably transmits information appropriate to its position within the premises. This information is suitably transmitted over a localised transmission area such that the communications apparatus receives said information only upon reaching or nearing said position. The system of the invention therefore preferably comprises a plurality of transmitter means dispersed around the premises, each transmitting information appropriate to its respective position.

To avoid swamping the visitor with irrelevant information, the communications apparatus is advantageously configured to convey to the visitor only a portion of the transmitted information, which portion is tailored to the visitor. In a retail scenario, the configuration may suitably reflect the customer's previous buying habits, discriminating against information relating to goods or services that the customer buys relatively infrequently, and favouring information relating to goods or services that the customer buys relatively frequently. To this end, it is preferred that the communications apparatus further comprises means for recognising the visitor and means for calling up information on that visitor's purchasing preferences. This can be achieved by reading information from a retail customer's loyalty card, for example.

It is also possible for the communications apparatus to include visitor-programmable means for programming said configuration. For example, the communications apparatus may further comprise means programmable to seek goods or services specified by a retail customer.

In a variant of the invention, the transmitted information is positional, the visit information is stored within the communications apparatus, and the communications apparatus is configured to convey to the visitor portions of the stored visit information appropriate to the position indicated by the positional information.

The transmitted information is preferably tailored to the visitor but should any transmitted information be deemed inappropriate to the visitor, the communications apparatus can filter that information to convey only information of relevance.

The communications apparatus can include a cellular telephony receiver, in which case the system may comprise cellular telephony transmission means for transmitting information to the communications apparatus. In that event, the system preferably further comprises detection means for detecting the presence of the communications apparatus within a telephony cell. This can be supplemented by memory means for storing the cell position of the communications apparatus and processor means for deducing cell-to-cell movement of the communications apparatus by comparing a newly detected cell position with a previously stored cell position. With this information, optionally supplemented by time information, message selection means can select an appropriate message in accordance with cell position, cell-to-cell movement, and/or time spent in a given cell.

The portable communications apparatus can be embodied in a terminal associated with a shopping trolley, basket or bag, or in an electronic wallet or purse.

The transmitter means can be arranged to transmit a call sign within and/or beyond the premises being visited and the portable communications apparatus preferably includes means for detecting and verifying the call sign. Advantageously, the call sign identifies the transmitter means and/or the premises or position with which that transmitter means is associated.

The portable communications apparatus preferably includes means for responding to a verified call sign with an answer message that announces the presence of the apparatus to the premises being visited. In that case, the premises suitably has means for receiving the answer message and in response transmitting to the communications apparatus a reply message including visit information. More preferably, the premises has means for identifying the communications apparatus sending the answer message and for tailoring the visit information to the identified apparatus.

The invention extends to related methods such as a method of conveying visit information to an actual or potential visitor, comprising transmitting to that visitor information appropriate to the visitor's position within or with respect to premises being visited, said information being transmitted to portable communications apparatus that moves with the visitor and that conveys visit information to the visitor.

Optional method steps and features are set out in the appended claims. For example, for the purposes of guiding a visitor to or around the premises, the method may comprise transmitting a next desired position to the communications apparatus. Alternatively, the communications apparatus may be programmed to determine the next desired position.

More generally, the method of the invention advantageously comprises determining the visitor's position with respect to or within the premises, and/or determining the visitor's movements with respect to or within the premises.

The present invention thus provides techniques for conveying information to an actual or potential visitor, notably for advertising to a customer in the vicinity of a retail environment as will hereafter be described to illustrate the invention. Such advertisements may be placed on a portable terminal which is dedicated to a particular store, on a portable terminal which operates over a particular area, for example over the area of a shopping mall, or even more broadly to those who are actually in the vicinity of the shopping mall. This last feature permits, for example, potential customers driving by on an adjacent road to be specifically targeted, while giving them the opportunity to pull into the shopping mall.

According to a preferred feature of the present invention, the message may be arranged to differ with the location of the consumer. For example, in a supermarket a display could be mounted on the handle of a shopping trolley or cart, which display responds to the location of the trolley within the supermarket. This allows, for example, a consumer approaching the frozen goods section to be informed of a special offer on oven-ready fish or whatever. Transmitters could be located at regular intervals throughout the store, for example at the end of each aisle. The portable terminal may store the relevant information and respond to signals from the transmitters for all of the geographical areas to display the relevant piece of that information. Alternatively, the transmitters may continuously transmit the relevant information for a specific area. The portable terminal picks up this information and displays it to the user until coming into range of another transmitter with a different message.

As an alternative or further preferred feature, the messages are customer-specific (or at least differ between classes of customer). In the above-described embodiment, this feature could be provided by allowing the user to swipe a loyalty card through a magnetic strip reader mounted with the terminal. The transmission system within the supermarket will then know, for example, that this particular shopper is usually interested in fresh fish, frozen vegetables and wine. The messages displayed can then be selected as appropriate.

One technique for transmitting on a per-customer basis would be to use SMS text messages on a customer's digital mobile telephone. As the cells in which such equipment operates become ever smaller (and shopping malls become ever larger) it becomes extremely likely that a person whose mobile telephone has registered in a particular cell will be visiting the shopping mall located in that cell. Even if a visit to the mall was not the person's original intention, the fact that they are in the vicinity of the mall means that they are a potential customer to whom advertisements could be directed. The mobile telephony system is arranged to send a specific message or messages to a user whose mobile telephone is registered to a particular cell. The messages could be arranged to differ over time, for example a first message could be "Do you know that the Mega Mall is right next to exit 27 of the motorway?". If the mobile telephone remains registered in that cell it could be inferred that the user is visiting the mall. Subsequent messages, therefore, could include ever more specific advertisements. The provision of such SMS text messages could be dependent upon overall network utilisation so that these user-specific advertisements do not degrade the quality of service provided to other users of mobile telephones on that network.

The portable terminal may, in certain embodiments, take the form of an electronic wallet or purse that also provides e-commerce functions such as carrying e-cash in non-volatile memory.

In other embodiments, the terminal may be fitted to a shopping trolley and perform other functions such as scanning the bar codes on the user's purchases for billing purposes.

The means by which the message is actually conveyed to the user can be visual, audio, etc or various combinations of these. The user could be given the option to switch off the audio messages (leaving visual messages) to ensure that the user is not unduly irritated.

The present invention will now be described, by way of example, with reference to the accompanying drawings, in which:
Figure 1 is a schematic plan view showing a shopping trolley or cart located in a store having a local transmission system;
Figure 2 is a schematic perspective view of a trolley-mounted terminal of Figure 1 in greater detail;
Figure 3 is a block schematic diagram of the system of Figure 1;
Figure 4 is a block circuit diagram showing internal architecture of an electronic wallet that is suitable for use instead of a trolley-mounted terminal in the system of Figure 1;
Figure 5 is a schematic area diagram of a cellular mobile telephone system in the environs of a shopping mall; and
Figure 6 is a flow chart of operation steps performed by the cellular telephone system of Figure 5 in accordance with an embodiment of the present invention.

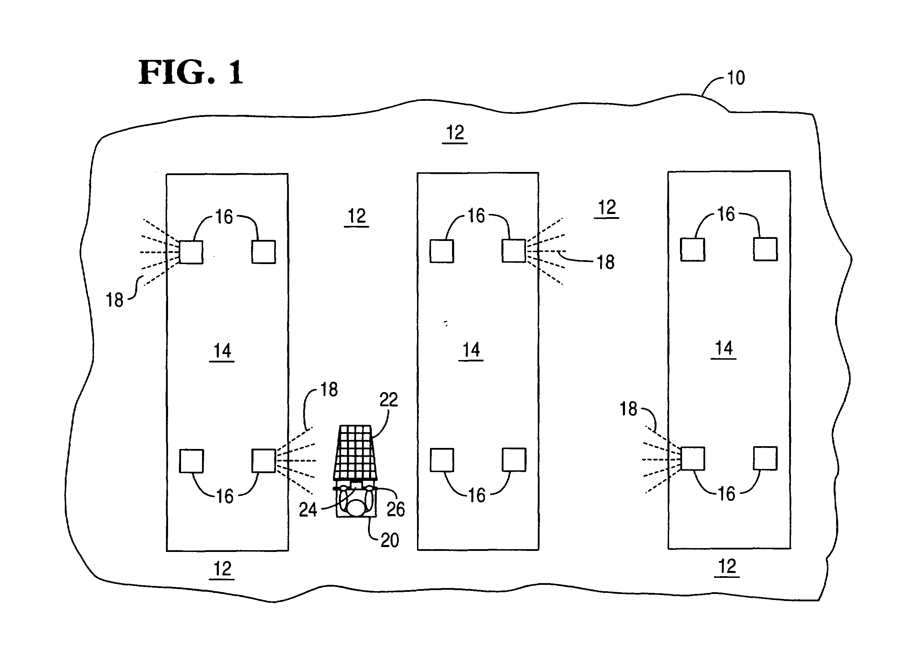

Figure 1 shows a customer area of a store 10 in schematic plan view, with aisles 12 defined between and around islands of shelving 14 that displays goods for purchase in the usual fashion. Several local transmitters 16 are distributed around the shelving 14, each transmitter 16 transmitting data signals 18 continually over a respective small transmission area within the store 10. The effect is that a customer or user 20 pushing a shopping trolley 22 along an aisle 12, or from one aisle 12 to the next aisle 12, passes through the transmission area of one transmitter 16 and then enters the transmission area ofthe next transmitter 16 and so on as the user 20 moves around the store 10.

The transmitters 16 each transmit short segments of digital information 18 relating to products available within the store, typically those within the transmission area of that transmitter 16 or related to products within the transmission area. This information 18 is received by a receiving and display terminal 24 mounted on a handle 26 of the shopping trolley 22, and is then displayed to the user 20 as appropriate.

Optionally, the terminal 24 includes a speech synthesiser and loudspeaker for making speech announcements to the user 20, either instead of or preferably in addition to a display of visual information. The information transmitted will typically include details of special offers or of items that are being heavily promoted at a particular time. Consequently, as the user 20 passes through the store, he or she is regaled with a series of advertisements relevant to his or her position within the store.

The technology may be modified in a number of ways without departing from the present invention. For example, the terminal 24 may store internally relevant information for the whole store and may then be responsive to positional information 18 transmitted by the transmitters 16 selectively to retrieve an appropriate part ofthat information from internal storage. This is another way of providing to the user 20 information relevant to the position of the trolley 22, as told to the terminal 24 by a nearby transmitter 16.

In another embodiment, the trolley 22 is specific to a particular store, or group of stores, and continually provides advertising to a user. This advertising may be retrieved from within the terminal 24 (for which transmitters 16 are not necessary) or it may be received from one or more transmitters 16 which each transmit the same message.

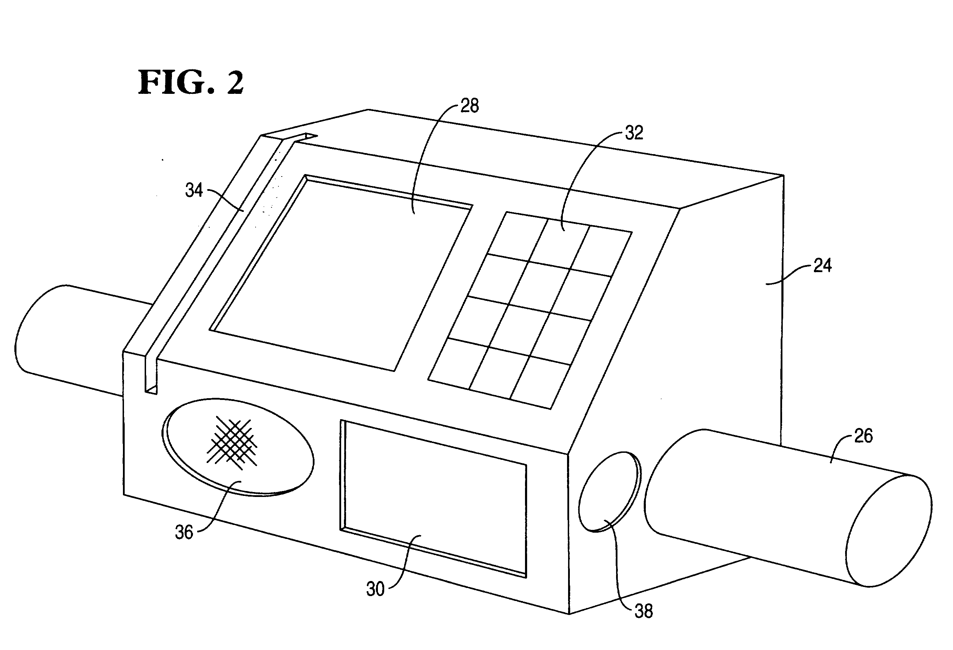

Figure 2 shows a perspective view of the terminal 24 mounted centrally on a handle 26 of the shopping trolley 22 (not shown) so as to be readily accessible to the user. It is emphasised that the terminal 24 can take any desired form and is shown in the form of Figure 2 purely to illustrate several of its functional capabilities. The terminal 24 includes one or more of a display 28, a bar code reader 30, a keypad 32, a magnetic card reader 34, a speaker 36 and a fingerprint recognition device 38. All ofthese facilities are illustrated in Figure 2 for completeness, although the invention can be embodied without each and every facility. For example, those skilled in the art will know that a single touch screen could do the job of the display 28 and keypad 32.

The bar code reader 30 is included to provide additional functionality. For example, it may be used to check the price of a bar-coded item, to scan and total a customer's purchases to save time at the check-out or, in combination with the aforementioned speech synthesiser, to announce to blind customers the exact identity of the product being scanned.

The keypad 32 is optionally provided to allow a user 20 to input miscellaneous data as the need arises, such as a request for further information, to indicate a multiple purchase, to cancel a purchase erroneously logged through the bar code reader 30, and so on. The keypad 32 can also be used to enter a PIN whereby the terminal 24 can identify the user 20 or verify the user's identity.

An optional magnetic card reader is shown at 34. In one embodiment, the user 20 can swipe an identity card, for example a supermarket loyalty card, through the reader 34 so as to identify the user to the terminal 24. This would allow the terminal 24 to provide user-specific advertising based on that user's previous purchasing habits. Advertising will clearly be of optimum effectiveness if it emphasises at least the general class of products known to be of interest to the user.

It will be clear to those skilled in the art that the terminal 24 can be configured to read and optionally write to a smart card or other data-carrying token.

With the benefit of positional information from the transmitters 16 and knowledge of the layout of store 10, the terminal 24 can guide the user 20 to whatever goods the user 20 may want. A particularly elegant use of this facility involves inputting a desired shopping list into the terminal 24, which can then guide the user 20 from one item to the next by the most efficient route, giving options as necessary at each stage. It is even possible to input a desired recipe, whereupon the terminal 24 can be programmed to guide the user through the store from one ingredient to the next, for example from flour to eggs to icing sugar if the user 20 wishes to bake a cake.

The user's needs such as a shopping list or a recipe can be carried on pre-programmed tokens such as smart cards or magnetic swipe cards, to be inputted to the terminal 24 by any known data-transmission means. Such tokens can be programmed at home or by means of a portable electronic device such as an electronic wallet.

Another way in which the terminal 24 can recognise the user is by means of the optional fingerprint recognition device 38. It will be noted that the device 38 is adjacent to the handle 26 for convenience: the user 20 need not even lift his or her hand from the handle 26 to be able to place a thumb against the device 38. Comparison of the user's fingerprint with stored images of fingerprints enables recognition of the user 20.

For reasons of memory demand, it is preferred that the stored fingerprint images used for recognition purposes are not stored locally at the terminal 24 but are instead received via the transmitters 16 as and when it is desired to compare them with a user's fingerprint. Alternatively, the terminal 24 may be provided with means to transmit the fingerprint details (and/or purchase details and so on) to an in-store computer system. The in-store system can then identify the user and transmit their identity, purchasing preferences and so on back to the terminal 24.

In a far simpler but less-preferred embodiment of the invention, the terminal 24 is simply provided with an electronic memory and a display for displaying advertisements regardless of the particular location of the unit or the identity of the user. In this case, the geographical limitation of the system is provided by a physical restriction placed on the movement of the terminal (be it within a particular store, mall and so on).

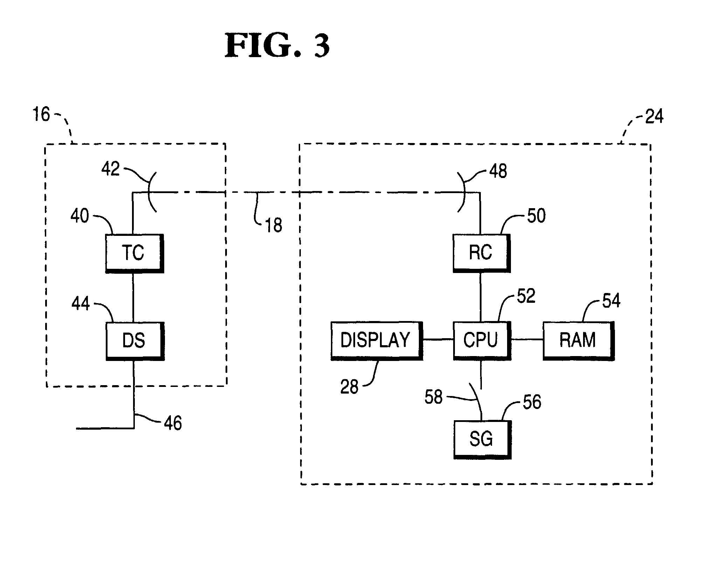

Figure 3 shows a block schematic diagram of communication between a transmitter 16 and the terminal 24. Each transmitter 16 comprises transmitting circuitry TC 40, an antenna 42 and a data store DS 44. A separate data store 44 may be co-located with each transmitting circuit 40 and antenna 42 around the store 10, as shown in Figure 3, in which case data may be received as necessary over communication line 46 from a central master data store (not shown). Alternatively, the central master data store may couple directly to each transmitting circuit 40 within the store 10.

The signal 18 transmitted by the antenna 42 travels via a receiving antenna 48 to receiving circuitry RC 50 in the terminal 24. The receiving circuitry 50 demodulates and decodes the signal as appropriate prior to storage thereof in a memory (RAM) 52 under control of a CPU 54. The contents of RAM 52 are then used by the CPU 54 to drive the display 28 using standard drive circuitry whose exact details are immaterial to the invention and will be known to the skilled reader. A sound generator SG 56 is also provided. The CPU 54 may cause the sound generator 56 to generate a brief alarm to indicate to a user 20 of the terminal 24 that a new message is being displayed or alternatively, or in addition, to synthesise a speech message for the user 20. Switch means 58 are provided to give the user 20 the ability to turn the sound function on or off: the switch means may be embodied in or controlled by the keypad 32.

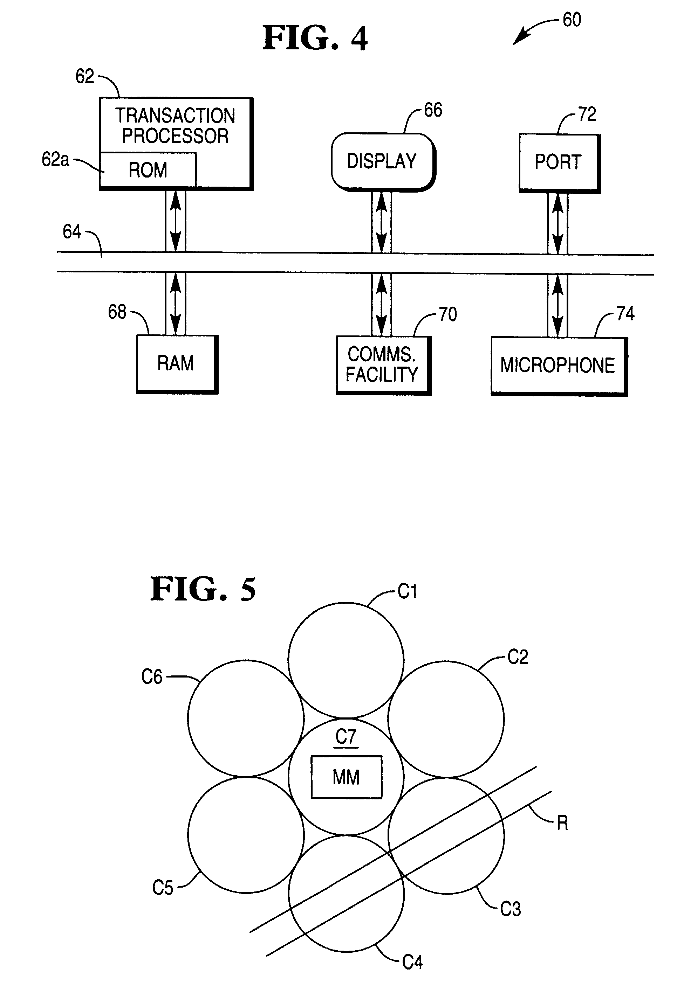

The terminal 24 need not necessarily be mounted to a shopping trolley but may be an item personal to the user in the form of a portable communications device having a facility for wireless data communications. Such a device would preferably take the form of an electronic wallet and this example will be referred to hereinafter with reference to Figure 4. The wallet advantageously employs low-power radio communications or other wireless means that do not depend upon line-of-sight between transmitter and receiver.

Referring to Figure 4, the wallet 60 comprises a transaction processor 62 incorporating a ROM 62a. The transaction processor 62 is connected through a data bus 64 to a display 66, a RAM 68 and an electronic mobile communications facility 70. The communications facility 70 incorporates an antenna (not shown). The wallet 60 further comprises a port 72 for optional additional memory/processor modules such as smart cards and a microphone 74, also optional.

In this instance, the store 10 may be equipped with a communications centre that stores an identity code or call sign for a multiplicity of electronic wallets 60 and the like. Call signs - which suitably include an identifier to indicate the store 10 as their source - are transmitted continuously by the communications centre to be received throughout the store and preferably over a wider area that includes but is not limited to the store. The benefit of this approach is that a suitable electronic wallet 60 carried by a user will pick up the call sign as the user approaches the store.

The transaction processor 62 is programmed to recognise an incoming signal as a call sign and is also programmed to compare the incoming call sign with a call sign stored in the ROM 62a. When the incoming call sign matches that stored in the ROM 20a, the transaction processor deciphers the identifier to register that the call signs emanated from the retail store and places an answering message on the bus 64 which is transmitted by the communications facility 70 as an outgoing message to be received by the communications centre of the store 10. In this way, the answering message advises the communications centre that the wallet 60 is in the vicinity of the retail store 33.

The communications centre responds to the message from the wallet 60 by sending personalised data to the device 10 preceded by the call sign for the device. The personalised data may, for example, include a welcome message, updating information about purchases available at a discount price, or credit facilities available to the user. The user is informed through the display 66 of the wallet 60 that communication has been established with the store 10 identified by its call sign.

It is similarly possible for the user's home, office or other location to include a communications centre, for example under the control of a home or office PC. As with the shop 10, the home or office communications centre is loaded with the call sign of the wallet 60 and transmits that call sign continuously in the immediate vicinity. In this instance, however, the call sign includes an appropriate unique identifier confirming the source of the call sign.

Accordingly, when the user carrying a wallet 60 comes into range, the wallet 60 recognises and responds to the call sign in a manner appropriate to the source of that call sign. For example, the wallet may interrogate the user's home PC to extract personal information such as e-mail messages received that day, which messages are displayed on the display 66 of the wallet 60.

In an alternative embodiment, the present invention may be realised by way of SMS text messages on a potential customer's digital mobile telephone. The basic operation of such telephones and text messages is well known to the skilled reader and so need not be discussed further here. It will also be apparent to the skilled reader that as the boundaries fade between mobile telephony and personal accessories such as personal organisers and electronic wallets, much of what follows applies equally to such accessories whether operating on a public telephone system or otherwise.

Figure 5 shows a schematic diagram of seven cells C1, C2, ..... C7 in a mobile telephone system. These cells will each be supported by local transmission and reception antennae as is known. In the central cell C7, there is a shopping mall (the "Mega Mall") MM that occupies most of cell C7. It is therefore reasonable to infer that a cellular mobile telephone within cell C7 belongs to somebody at the shopping mall, or en route to or from the shopping mall. A road R is shown passing through adjacent cells C3 and C4: road R is linked to MM by other roads that are omitted for clarity. For present purposes, it should simply be understood that a person travelling along road R has the option of visiting MM.

The skilled reader will know that when an activated cellular mobile telephone moves into a new cell, it registers its location with the host system. The registration may be updated from time to time, even if the telephone remains in the same cell, for example whenever the telephone is powered up after having been switched off. This allows the host system to route calls destined for that telephone to the correct cell. In the present embodiment, in response to such registration in one or more predetermined cells, the user will receive a message relating to shopping at the mall MM. To ensure that the message is appropriate to the user and that any subsequent messages remain appropriate to the user, the message depends upon the cell through which the user is travelling and has regard to the user's movement through and between neighbouring cells.

In the present example, when the user's mobile cellular telephone registers with cell C3 or cell C4 as a user approaches the mall MM on road R, a general advertising or information message such as "Visit the Mega Mall!" can be sent to the user's telephone. Should the user then enter cell C7, from which it may be inferred that the user is in fact visiting the mall MM, a particular advertising or information message may be sent to the user's telephone from one of the stores in the mall upon registration of the telephone with the host system in cell C7. For example, a particular store within the mall could advertise itself by transmitting the message "Welcome to the Mega Mall... be sure to visit store X".

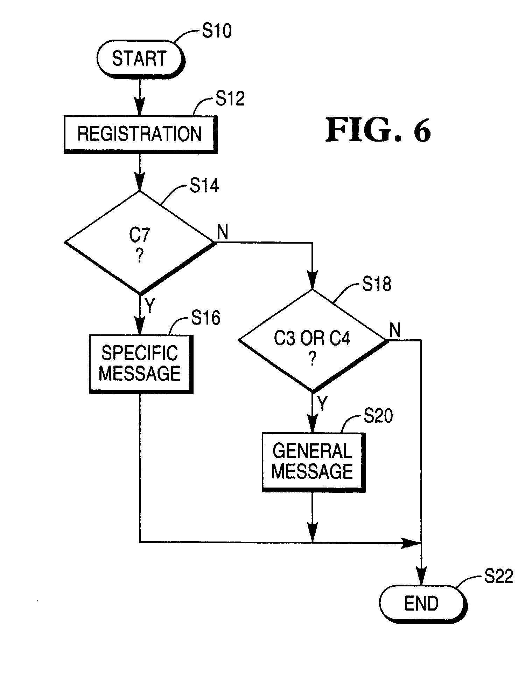

Figure 6 is a flow diagram showing the basic steps effected by the cellular telephone system in accordance with the present embodiment. The routine starts at step S10 and the registration of a cellular telephone occurs in the normal way at step S12. Processing proceeds to step S14 where it is determined whether or not the cellular telephone is in cell C7. If yes, then processing proceeds to step S16 where a specific advertisement or other information relating to the mall is given to the user. As is known, this may be accompanied by an audible warning from the mobile cellular telephone or, if the telephone so permits, a vibrating silent alert. Conversely, if the cellular telephone is determined not to be in cell C7 then processing proceeds to step S18 where the system determines whether or not the telephone is in either of cell C3 or cell C5. Ifyes, then processing proceeds to step S20 where a more general advertisement for the mall is displayed to the user. After an advertisement is displayed at step S16 or step S20, or if the cellular phone is in none of the cells C3, C5 or C7, then processing ends at step S22. These steps can be repeated upon each registration, or by interrogating the system at intervals to determine which telephones are active in a given cell.

In a preferred embodiment, the specific message at step S16 is varied in dependence upon the number of registrations in cell C7 by the cellular mobile telephone. For example, on first registration in cell C7, a message of welcome to the mall may be displayed whereas subsequent registrations in cell C7 trigger messages advertising particular stores at random.

In a further preferred embodiment, the general message at step S20 is varied to reflect movement out of cell C7 into cell C3 or C4, indicating that the user is leaving the mall MM. For example, the message then triggered could be "Thank you for your custom... visit the Mega Mall again soon" To this end, it is preferred that the system stores the user's previous cell location, from which it can infer the user's direction of movement. Effectively, the processing steps should ask a further question upon determining that the user is in cell C3 or cell C4, namely, has the user just been in cell C7?

As a further alternative, a fixed series of advertisements are triggered on each registration.

Many other variations are possible within the inventive concept. For example, an electronic wallet carried by the visitor can interact with a terminal supplied by a store or other premises being visited. It is contemplated that a (preferably wireless) data link between the wallet and the terminal will enable the terminal to act as a monitor for the wallet. This allows the wallet to be left in e.g. a pocket or a purse while sending information that it receives to a prominently-positioned terminal, for example mounted on a shopping trolley as aforesaid, for the purposes of display. The terminal, too, can send data to the wallet: for example, using a bar code reader, the terminal can convey to the wallet details of purchases loaded into a shopping trolley. The wallet can then store that data until it transmits the data to e.g. a checkout terminal when it is desired to complete a purchase transaction upon leaving the store.

Whilst claims have been formulated to the present invention, the extent of protection should be understood to encompass everything within the spirit and scope of the disclosure and any generalisation thereof.

## Claims

1. A communications system for conveying visit information to an actual or potential visitor (20), the system comprising transmitter means (16) for transmitting to that visitor (20) information (18) appropriate to the visitor's position within or with respect to premises being visited (10, MM), and portable communications apparatus (24) that moves with the visitor (20) for receiving said transmitted information (18) and conveying visit information to the visitor (20).

2. The system of Claim 1, wherein the transmitter means (16) transmits information (18) appropriate to its position within the premises (10, MM).

3. The system of Claim 2, wherein the transmitter means (16) transmits information (18) over a localised transmission area such that the communications apparatus (24) receives said information only upon reaching or nearing said position.

4. The system of Claim 3, comprising a plurality of transmitter means (16) dispersed around the premises (10, MM) and each transmitting information (18) appropriate to its respective position.

5. The system of any preceding Claim, wherein the communications apparatus (24) is configured to convey to the visitor (20) only a portion of the transmitted information (18), which portion is tailored to the visitor (20).

6. The system of Claim 5, wherein the communications apparatus (24) is configured to filter out transmitted information (18) deemed irrelevant to the visitor (20).

7. The system of Claim 5 or Claim 6, wherein the visitor is a customer and wherein said configuration reflects the customer's previous buying habits.

8. The system of Claim 7, wherein the configuration discriminates against information (18) relating to goods or services that the customer (20) buys relatively infrequently, and favours information (18) relating to goods or services that the customer (20) buys relatively frequently.

9. The system of any of Claims 5 to 8, wherein the communications apparatus (24) further comprises means for recognising the visitor (20) and means for calling up information on that visitor's preferences.

10. The system of Claim 9, wherein the visitor is a customer and wherein the communications apparatus (24) further comprises means for reading information from the customer's loyalty card.

11. The system of Claim 9 or Claim 10, wherein the communications apparatus (24) further comprises matching means for matching a unique visitor (20) characteristic such as a PIN, a fingerprint or an iris image.

12. The system of any of Claims 5 to 11, wherein the communications apparatus (24) further comprises visitor-programmable means for programming said configuration.

13. The system of Claim 12, wherein the communications apparatus (24) further comprises means programmable to seek items specified by the visitor (20).

14. The system of any preceding Claim, wherein the transmitted information (18) is positional, the visit information is stored within the communications apparatus (24), and the communications apparatus (24) is configured to convey to the visitor (20) portions of the stored visit information appropriate to the position indicated by the positional information (18).

15. The system of any preceding Claim, wherein the communications apparatus (24) includes a cellular telephony receiver and the system comprises cellular telephony transmission means for transmitting information (18) to the communications apparatus (24).

16. The system of Claim 15, further comprising detection means for detecting the presence of the communications apparatus (24) within a telephony cell (C1-C7).

17. The system of Claim 16, further comprising memory means for storing the cell position of the communications apparatus (24) and processor means for deducing cell-to-cell movement of the communications apparatus (24) by comparing a newly detected cell position with a previously stored cell position.

18. The system of Claim 16 or Claim 17, further comprising message selection means for selecting a message in accordance with cell position, cell-to-cell movement, and/or time spent in a given cell.

19. The system of any of Claims 15 to 18 and employing a public telephony network.

20. The system of any preceding Claim, wherein the portable communications apparatus (24) is a terminal associated with a shopping trolley (22), basket or bag.

21. The system of any of Claims 1 to 20, wherein the portable communications apparatus (24) is an electronic wallet or purse.

22. The system of any preceding Claim, wherein the transmitter means (16) is arranged to transmit a call sign within and/or beyond the premises (10, MM) and the portable communications apparatus (24) includes means (62) for detecting and verifying the call sign.

23. The system of Claim 22, wherein the call sign identifies the transmitter means (16) and/or the premises (10, MM) or position with which that transmitter means (16) is associated.

24. The system of Claim 22 or Claim 23, wherein the portable communications apparatus (24) includes means (70) for responding to a verified call sign with an answer message that announces the presence ofthe apparatus (24) to the premises (10, MM).

25. The system of Claim 24, wherein the premises (10, MM) has means for receiving the answer message and in response transmitting to the communications apparatus (24) a reply message including visit information.

26. The system of Claim 25, wherein the premises (10, MM) has means for identifying the communications apparatus (24) sending the answer message and for tailoring the visit information to the identified apparatus (24).

27. A method of conveying visit information to an actual or potential visitor (20), comprising transmitting to that visitor (20) information (18) appropriate to the visitor's position within or with respect to premises being visited (10, MM), said information (18) being transmitted to portable communications apparatus (24) that moves with the visitor (20) and that conveys visit information to the visitor (20).

28. The method of Claim 27, comprising transmitting from a position within the premises (10, MM) information (18) appropriate to that position.

29. The method of Claim 28, wherein the communications apparatus (24) receives said information (18) upon reaching or nearing said position.

30. The method of any of Claims 27 to 29, wherein the communications apparatus (24) conveys to the visitor (20) only a portion of the transmitted information (18), which portion is tailored to the visitor (20).

31. The method of Claim 30, wherein the communications apparatus (24) filters out transmitted information (18) deemed irrelevant to the visitor (20).

32. The method of Claim 30 or Claim 31 and wherein the visitor is a customer, comprising configuring the communications apparatus (24) in accordance with the customer's previous buying habits, to discriminate against information (18) relating to goods or services that the customer (20) buys relatively infrequently, and to discriminate in favour of information (18) relating to goods or services that the customer (20) buys relatively frequently.

33. The method of Claim 32, comprising recognising the customer (20) and calling up information on the customer's purchasing preferences to configure the apparatus (24) for the customer (20).

34. The method of Claim 33, comprising employing information from the customer's loyalty card to recognise and/or configure the apparatus (24) for the customer (20).

35. The method of Claim 33 or Claim 34, comprising matching a unique customer (20) characteristic such as a PIN, a fingerprint or an iris image to recognise and/or configure the apparatus (24) for the customer (20).

36. The method of any of Claims 27 to 35, wherein configuration is programmed by the visitor (20).

37. The method of Claim 36, wherein the apparatus (24) is configured to seek items specified by the visitor (20).

38. The method of Claim 37, wherein the specified items constitute a shopping list or a recipe.

39. The method of any of Claims 27 to 38, comprising receiving transmitted positional information (18) and retrieving and conveying to the visitor stored purchasing information in accordance with the positional information (18).

40. The method of any of Claim 27 to 39, comprising transmitting information (18) to the communications apparatus (24) by cellular telephony transmission means.

41. The method of Claim 40, further comprising detecting the presence of the communications apparatus (24) within a telephony cell (C1-C7).

42. The method of Claim 41, further comprising storing the cell position of the communications apparatus (24) and deducing cell-to-cell movement of the communications apparatus (24) by comparing a newly detected cell position with a previously stored cell position.

43. The method of Claim 41 or Claim 42, further comprising selecting a message in accordance with cell position, cell-to-cell movement, and/or time spent in a given cell.

44. The method of any of Claims 27 to 43, comprising transmitting a call sign within and/or beyond the premises (10, MM) and detecting and verifying the call sign by means of the portable communications apparatus (24).

45. The method of Claim 44, and using the call sign to identify the transmitter means (16) and/or the premises (10, MM) or position with which that transmitter means (16) is associated.

46. The method of Claim 44 or Claim 45, comprising responding to a verified call sign with an answer message that announces the presence of the apparatus (24) to the premises (10, MM).

47. The method of Claim 46, comprising receiving the answer message at the premises (10, MM) and in response transmitting to the communications apparatus (24) a reply message including visit information.

48. The method of Claim 47, comprising identifying the communications apparatus (24) sending the answer message and tailoring the visit information to the identified apparatus (24).

49. The method of any of Claims 27 to 48, comprising transmitting a next desired position to the communications apparatus (24).

50. The method of any of Claims 27 to 48, wherein the communications apparatus (24) is programmed to determine the next desired position.

51. The method of any of Claims 27 to 50, comprising determining the visitor's position with respect to or within the premises (10, MM).

52. The method of any of Claims 27 to 51, comprising determining the visitor's movements with respect to or within the premises (10, MM).
